# EUROPEAN PATENT APPLICATION

(11) **EP 4 723 571 A1**
(43) Date of publication of application: **08.04.2026**
(21) Application number: 24829744.2
(22) Date of filing: 17.01.2024
(51) Int. Cl.: H04L 41/0803

(54) **MODEL EXTENSION METHOD, ELECTRONIC DEVICE AND STORAGE MEDIUM**

(30) Priority: 28.06.2023 CN 202310778141
(71) Applicant: ZTE CORPORATION, Shenzhen, Guangdong 518057 (CN)
(72) Inventor: GUO, Wei, Shenzhen, Guangdong 518057 (CN)
(74) Representative: Ziebig Hengelhaupt Intellectual Property Attorneys Patentanwaltskanzlei PartGmbB
(86) International application number: PCT/CN2024/072664
(87) International publication number: WO 2025/001081

(57) **Abstract**

The present application belongs to the technical field of computers. Disclosed are a model extension method, an electronic device and a storage medium. The method comprises: on the basis of the type of a target service, configuring a TR181 extended model file of the target service with an index field; on the basis of description parameters of the target service, configuring the TR181 extended model file of the target service with at least one description field, wherein the description field is used for expressing features of the description parameters; and setting the length of each description field on the basis of the degree of adaptability of the target service in terms of globalization and a global specification, so as to extend the TR181 extended model file.

## Description

### CROSS-REFERENCE TO RELATED APPLICATIONS

The present application is proposed based on and claims priority to Chinese Application No. 202310778141.5, filed with the Chinese Patent Office on June 28, 2023, with the title "MODEL EXTENSION METHOD, ELECTRONIC DEVICE AND STORAGE MEDIUM", the contents of which is hereby incorporated by reference in its entirety.

### TECHNICAL FIELD

The embodiments of the present application relate to the field of computer technology, and in particular to a model extension method, an electronic device, and a storage medium.

### BACKGROUND

As a network management protocol for terminal devices, TR069 is increasingly being applied to wireless coverage solutions, with related products widely used in ground-air communication, factories and mines, enterprise parks, ports and docks, intensive office buildings, and home broadband. Compared with the early Simple Network Management Protocol (SNMP), TR069 has made significant improvements in security, transmission protocols, and deployment methods. However, in practical applications, there are still issues where the TR181 model cannot fully meet the needs of network management, and simple or incomplete descriptions of network management and maintenance information.

### SUMMARY

The embodiments of the present application provide a model extension method, an electronic device, and a storage medium.

To solve the above technical problems, the present application is implemented as follows.

In the first aspect, provided is a model extension method, performed by a network management device, comprising: configuring, on the basis of a type of a target service, a TR181 extended model file of the target service with an index field; configuring, on the basis of a description parameter of the target service, the TR181 extended model file of the target service with at least one description field, wherein the description field is used for expressing a feature of the description parameter; and setting a length of each description field on the basis of a global specification and a degree of adaptability of the target service in terms of globalization, so as to extend the TR181 extended model file..

In the second aspect, provided is a model extension method, performed by a terminal device, method comprising: obtaining a pre-set TR181 extended model file for a target service, wherein the TR181 extended model file comprises: an index field configured on the basis of a type of the target service, at least one description field configured on the basis of a description parameter of the target service, and an internationalization field which is described in at least two languages, and added to a target field among the at least one description field on the basis of a degree of adaptability of the target service in terms of globalization, and the TR181 extended model file records at least one association relationship, the at least one association relationship comprising association relationship between a value of the index field, a value the description field, and a value of the internationalization field; and uploading the TR181 extended model file to the network management device.

In the third aspect, provided is an electronic device, comprising a processor and a memory, the memory stores programs or instructions executable on the processor, the programs or instructions, when executed by the processor, implement the steps of the method according to the first aspect, or the steps of the method according to the second aspect.

In the fourth aspect, provided is a readable storage medium storing programs or instructions, the programs or instructions, when executed by a processor, implement the steps of the method according to the first aspect, or the steps of the method according to the second aspect.

In the fifth aspect, provided is a computer program product comprising at least one computer program, the computer program is loaded and executed by a processor to implement the steps of the method according to the first aspect, or the steps of the method according to the second aspect.

### BRIEF DESCRIPTION OF DRAWINGS

The accompanying drawings are incorporated into the specification and form a part of the specification, illustrating the embodiments in accordance with the present application and used together with the specification to explain the principles of the present application.
Fig. 1 shows a flowchart of a model extension method provided by an exemplary embodiment of the present application.
Fig. 2 shows another flowchart of a model extension method provided by an exemplary embodiment of the present application.
Fig. 3 shows yet another flowchart of a model extension method provided by an exemplary embodiment of the present application.
Fig. 4 shows a schematic diagram of a structure of a model extension system provided by an exemplary embodiment of the present application.
Fig. 5 shows a structural block diagram of an electronic device provided by an exemplary embodiment of the present application.

### DETAILED DESCRIPTION

Exemplary embodiments will be described in detail herein, with examples shown in the accompanying drawings. When referring to the accompanying drawings, unless otherwise indicated, the same numbers in different drawings represent the same or similar elements. The implementations described in the following exemplary embodiments do not represent all implementations consistent with the present application. Instead, they are only examples of devices and methods consistent with some aspects of the present application as described in the accompanying claims.

In order to better understand the technical solution provided in the present application, the technology involved in the present application is introduced firstly.

With the rapid development of the 5th Generation Mobile Communication Technology (5G) communication network, high bandwidth, low latency, and high reliability are the basic characteristic capabilities. More and more wireless coverage solutions are being applied to ground-air communication, factories and mines, enterprise parks, ports and docks, intensive office buildings, and home broadband, such as:
1. In response to the high reliability requirements in the production field, the 5G industrial gateway serves as the core of video feedback and synthesis in the industrial control field, ensuring high reliability, low latency, and stable transmission of unmanned driving control data in factories and mines, parks, and ports.
2. With the increasing number of passengers on civil aviation aircraft, air networking has become an increasingly urgent basic demand for the civil aviation system. In ATG (Air To Ground), mature ground mobile communication technology is used to build a ground-to-air broadband coverage network. The Customer Premise Equipment (CPE) of ATG can provide entertainment, office, and black box data return services for passengers on board.
3. With the popularization of broadband access in households and the rapid development of Voice over Internet Protocol (VoIP) and Interactive Personality TV (IPTV) services, more and more IP terminals are introduced into home networks.

In summary, it is increasingly difficult to manage complex and numerous terminal devices by traditional network management based on Simple Network Management Protocol (SNMP). TR069, as a network management protocol stack for terminal devices, has emerged. TR069 defines a new network management architecture, including the TR181 management node model, interactive interfaces, and basic management parameters, so that different types and manufacturers of devices can be uniformly managed by the network, greatly improving the efficiency of terminal management and the universality of accessing Auto Configuration Server (ACS) network management. The CPE WAN Management Protocol (CWMP), numbered TR-069, also known as TR-069 protocol, comprises a system specification such as TR069 and TR181. This specification provides a general framework, message specification definition, and parameter node model for managing new network terminal devices. TR069 mainly defines communication protocol specifications and interaction process definitions, while TR181 specification defines the management node model.

Compared to SNMP protocol, TR069 protocol has made significant improvements in security, transmission protocol, and deployment methods, but there are still the following issues.
1) The network management operation and maintenance information is simple, and character length defined by the specification is too small, such as simple English words with underlines cannot be described completely, which makes on-site positioning difficult, increases the cost, and reduces the efficiency.

For example, in the TR069 protocol, the alarm service corresponds to the alarm reason ProbableCause, the specification defines field length as Srting (64), which is only 64 bytes (32 Chinese characters), and the alarm description SpecificProblem String (128), which is only 128 bytes (64 Chinese characters). From this, it can be seen that the character length defined by the specification is too small, which may cause that detailed alarm information cannot be carried, on-site operation and maintenance cannot be guided effectively, and contact with the network administrator or terminal manufacturer for further support in positioning is needed during on-site operation and maintenance.

2) The lack of basic terminal information results in incomplete network management functions and unsupported general capabilities.

For example, in the TR069 protocol, key fields, which play an important role in guiding quick resolution of alarm events on site and are also the data foundation for guided alarms in To Business (ToB) network management, for alarm services such as alarm handling suggestions and alarm code names are not defined. However, due to the missing field of TR069 protocol, the corresponding network management function is currently unavailable.

3) The terminal only supports one language, which cannot meet the information presentation requirements for multilingual environments of network management products. The journey of product globalization is far away.

Specifically, the specification does not define the internationalization description of parameter values of String type, which results in only one language being supported in the corresponding service of the terminal regardless of the language or multiple languages supported by the network management. Moreover, when the terminal reports service data, each key field is usually a simple combination of several English words, or an abbreviation of English word mixed with an underline.

In addition, TR069 defines that the communication protocol stack between ACS and CPE is based on the Simple Object Access Protocol (SOAP) message body for Remote Procedure Call Protocol (RPC) method calls. The number of fields and the character length will increase the size of the SOAP message body, while conventional SOAP messages currently have a large number of duplicate tags, thus, adding fields or detailed descriptions, as well as internationalization content, will increase the size of the SOAP message body. Moreover, message transmission requires higher network bandwidth, longer transmission times for large messages, and is more likely to be affected by network fluctuations, resulting in higher requirements for upper layer application retries.

In view of this, the present application proposes a model extension method, an electronic device, and a storage medium to solve the above problems, reduce the operation and maintenance costs of terminal devices, improve the response speed of customers, and enhance the competitiveness of products.

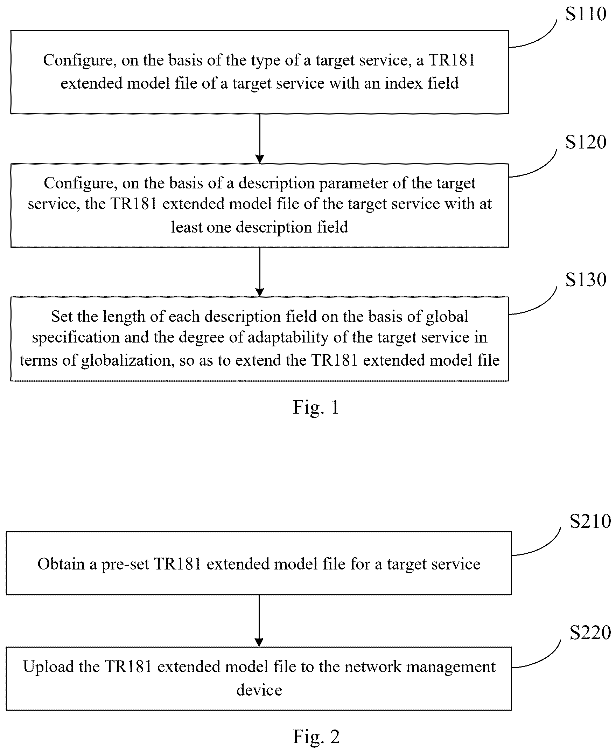

Fig. 1 shows a flowchart of the model extension method in the embodiment of the present application, the method 100 may be executed by a network management device or other devices. As shown in Fig. 1, the method may comprise the following steps.

At S110: a TR181 extended model file of a target service is configured with an index field based on the type of the target service.

It can be understood that different types of services have different TR181 extended model files. Therefore, the network management device may configure TR181 extended model files of the target service with the index field according to the type of the target service corresponding to a terminal. That is to say, the TR181 extended model file corresponding to the target service may be determined by means of the index field. Index fields include but are not limited to unique identifiers.

At S120: the TR181 extended model file of the target service is configured with at least one description field based on a description parameter of the target service.

The description field is used for expressing a feature of the description parameter.

It can be understood that the description parameter refers to the service data of the target service of the terminal device, and the network management device configures the TR181 extended model file of the target service with at least one description field according to the service data. For example, if the target service is an alarm service, the description field corresponding to the alarm service may include fields such as the alarm detailed description, alarm reason, alarm handling suggestions, alarm type, and alarm level that correspond to the alarm code name. If the target service is a performance indicator statistics service, the description fields corresponding to the performance indicator statistics service may include fields such as network access, network health, network energy consumption, network interference, and other metrics designed by manufacturers. It should be noted that the at least one description field is determined by the network management device, for example, during the operation period of the terminal. Even if there is no alarm service running, the description field corresponding to the alarm service is also determined. That is to say, these description fields are uploaded to the network management device by the terminal not only when a relevant service event occurs during the operation.

At S130: the length of each description field is set on the basis of global specification and the degree of adaptability of the target service in terms of globalization, so as to extend the TR181 extended model file.

It can be understood that in order to ensure data consistency and operability, each description field needs to be set to ensure that data can be correctly transmitted and parsed between various systems and applications, so that the data readability and maintainability are improved, and data is easier to interact and share between different systems. It should be noted that the field length can be reasonably set on the basis of the degree of adaptability of the target service in terms of globalization and the global specification. Field lengths that are too long or too short may affect the efficiency of data storage and transmission. For example, for the alarm type field, the longest alarm type value may be obtained by enumerating all alarm types, so that the length of the alarm type field.

In the embodiment of the present application, the network management device configures the TR181 extended model file of the target service with the index field based on the type of the target service, configures the TR181 extended model file of the target service with at least one description field based on the description parameter of the target service, and sets the length of each description field based on the degree of adaptability of the target service in terms of globalization and the global specification to extend the TR181 extended model file, so that the target service data of the terminal device can be correlated with TR181 through index fields, and the corresponding TR181 extended model can be extended based on the description parameter of the target service of the terminal device, which solves the problems of the lack of some basic information, the simplicity of operation and maintenance information content, and the absence of complete descriptions. It not only makes the length of the description field meet the needs of the target service, but also improves the flexibility and usability of the TR181 extended model.

In the embodiment of the present application, the network management device extends the TR181 extended model file, so that the terminal device may record at least one association relationship based on the extended TR181 extended model file. The association relationship includes the association relationship between the value of the index field and the value of each description field, which enables the network management device to obtain the value of each description field corresponding to the target value of the index field sent by the terminal device based on the association relationship during service operation, thereby obtaining relevant information of the current service and achieving corresponding management functions.

In an implementation, setting the length of each description field on the basis of the degree of adaptability of the target service in terms of globalization and the global specification may include that: on the basis of the degree of adaptability of the target service in terms of globalization, an internationalization field described in at least two languages is added to a target field among the at least one description field; and on the basis of a standard expression of each description field and a standard expression of each internationalization field, the length of each description field and the length of each internationalization field are set. It can be understood that in the traditional TR181 model, due to the fact that the runtime data of the terminal device only supports one language, the range of audience of the TR181 model corresponding to the target service becomes smaller, resulting in poor user experience. Therefore, the diversity of target users and the market demand of the target service need to be considered, and multilingual support needs to be provided as much as possible to meet a wider range of user groups and market demand. In addition, in order to enable the description field to carry detailed information, the length of each description field and the length of the internationalization field need to be set based on the global specifications of each description field and internationalization field.

In the above implementation of the present application, in order to make the length of each description field and the length of the internationalization field appropriate, for example, to fully express each description field and internationalization field without redundancy, the length of each description field and the length of each internationalization field are set according to the standard expression of each description field and each internationalization field. For example, for the alarm type field, the length of the alarm type field may be determined by enumerating the standard expressions of all alarm types and using different numbers to refer to different alarm types. For another example, for the alarm reason field, according to the standard expression of the alarm reason, such as the expression of who does what, then the length of the alarm reason field is determined based on the lengths of all possible expressions of "who" and the lengths of all possible expressions of "what to do". For example, for the field of the English alarm code name, the length of the field of the English alarm code name may be determined by enumerating all the English expressions of the alarm code name, and determining the length corresponding to the longest expression.

In an implementation, after setting the length of each description field on the basis of the degree of adaptability of the target service in terms of globalization and the global specification, the method further includes that: a filling rule is added to each field of the TR181 extended model file on the basis of a meaning of each description field and the length of each description field. For example, Table 1 shows a TR181 extended model designed by the network management device for the terminal device according to the characteristics of the target service.

**Table 1.**

| alarm code name | ala rm n am e i n Ch ine se | ala rm c od e na me i n En gli sh | alarm reas on c ode | ala rm re as on in Ch ine se | alarm reas on in Engl ish | handli ng sug gestion in Ch inese | handling suggestio n in Eng lish | alarm type | Alar m 1 evel | code value type |
|---|---|---|---|---|---|---|---|---|---|---|
| sourc e of value : Devi ce.Fa ultM gmt. Queu edEv ent.i. Prob able Caus e | | | the s ame as D evice. Fault Mgm t.Que uedE vent.i .Prob ableC ause | | | | | 0: communi cation alar m | 0: u ndef ined | 0: ala rm co de |
| | | | | | | | | 1: handling error alarm | 1: s erio us | 1: not ificati on co de |
| | | | | | | | | 3: device al arm | | |
| | | | | | | | | | 2: mai nly | |
| | | | | | | | | 4: environm ent alarm | | 2: Un iversal type (used as bot h an alarm code and a notific ation code.) |
| | | | | | | | | 5: network management alarm | 3: s eco ndar y | |
| | | | | | | | | 6: integrity alarm | | |
| | | | | | | | | | 4: war ning | |
| | | | | | | | | 7: availabili ty alarm | | |
| | | | | | | | | 8: physical attack alarm | | |
| | | | | | | | | 9: security attack alarm | | |
| | | | | | | | | 10: time li mi alarm | | 3: A DMC alarm |
| Mqtt Conn ectio n | M QT T 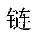 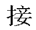 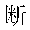 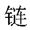 | M Q TT li nk br ok en | Mqttc onnec tion | Ed ge co ntr ol 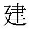 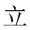 mq tt 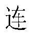 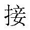 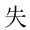 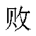 | Edge contr ol fai led t o est ablish maq tt co nnect ion. | 1. 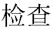 MQTT Serve r 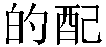 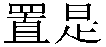 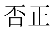 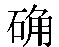 ; 2. 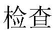 T LS 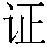 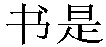 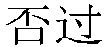 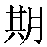 ; 3. 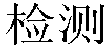 5 G 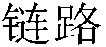 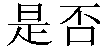 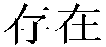 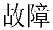 | 1.Check whether t he MQT T Server configura tion is c orrect. | 0 | 1 | 0 |
| | | | | | | | 2.Check whether t he TLS certificate expires. | | | |
| | | | | | | | 3.Check whether t he 5G li nk is fau lty. | | | |

The fields of the TR181 extended model include: alarm code name, alarm code name in Chinese, alarm code name in English, alarm reason code, alarm reason in Chinese, handling suggestion in Chinese, handling suggestion in English, alarm type, alarm level, and code value type. Each field has a corresponding filling rule, for example, alarm level includes 5 levels, 0: undefined; 1: serious; 2: mainly; 3: secondary; 4: warning, and the manufacturer corresponding to the terminal device can only fill in the number corresponding to the alarm level when filling in the alarm level. In this implementation, adding filling rules to each field of the TR181 extended model file solves the problems of no international language, missing fields, and insufficient length, which helps ensure the accuracy, consistency, and completeness of data, and improves the quality and availability of data.

In an implementation, after setting the length of each description field on the basis of the degree of adaptability of the target service in terms of globalization and the global specification, the method further includes that: a file upload command is issued to the terminal device upon a target condition, where the file upload command is used to instruct upload of the TR181 extended model file corresponding to the terminal device; and the TR181 extended model file uploaded by the terminal device is received, where the uploaded TR181 extended model file records at least one association relationship, the at least one association relationship including the association relationship between the value of the index field, the value of the description field, and the value of the internationalization field. It can be understood that, after setting the length of each description field on the basis of the degree of adaptability of the target service in terms of globalization and the global specification, the network management device needs to receive the TR181 extended model file uploaded by the terminal device. Therefore, the network device needs to issue the file upload command to the terminal device upon the target condition.

In another implementation, the target condition comprises one of the following: determining that the current version of the terminal device lacks the corresponding service model file; or determining that the terminal device accesses the network management device for the first time; or determining that the connection status between the network management device and the terminal device is changed. That is to say, if the current version of the terminal device lacks the corresponding service model file, or if the model terminal device first accesses the network management device, or if the connection status between the network management device and the terminal device is changed, the file upload command is issued to the terminal device.

In an implementation, issuing the file upload command to the terminal device may include that: the file upload command is converted into a first Simple Object Access Protocol (SOAP) message body upload by means of a TR069 specification file; and the first SOAP message body is sent to the terminal device through a remote procedure call (RPC) interface defined by the TR069 specification. It can be understood that TR069 defines communication protocol specifications and interaction processes, enabling unified remote management and configuration of terminal devices that support the protocol. The first Simple Object Access Protocol (SOAP) is an XML based protocol used for communication between applications over the network. The SOAP message body is a data carrier transmitted through the SOAP protocol and is typically represented in XML format. By converting the file upload command into the SOAP message body uploaded by means of the TR069 specification file, remote management and configuration of devices can be achieved, and the management efficiency, security, and data transmission reliability are improved. Sending the first SOAP message body through the Remote Procedure Call Protocol (RPC) interface enables remote calling across networks, supporting cross-language communication and improving the efficiency and performance.

In an implementation, receiving the TR181 extended model file uploaded by the terminal device includes that: the TR181 extended model file uploaded by the terminal device is received through the RPC interface defined by the TR069 specification; and the TR181 extended model file uploaded by the terminal device is obtained by parsing the TR181 extended model file. It can be understood that after receiving the file upload command sent by the network management device, the terminal device may send the TR181 extended model file to the network management device according to the file upload command. After receiving the TR181 extended model file, the network management device may obtain the TR181 extended model file uploaded by the terminal device by parsing the TR181 extended model file.

In an implementation, the terminal may also upload a SOAP message body to notify the network management device that the TR181 extended model file has been uploaded. Therefore, in this implementation, the method may further include that: a second SOAP message body uploaded by the terminal device is received through the RPC interface defined by the TR069 specification, and completion of upload of the TR181 extended model file upload is obtained by parsing the second SOAP message body.

In an implementation, the method further includes that: specification of an extended model is formulated, and the specification of the extended model includes at least one of the following file upload attributes of the TR181 extended model file, including the file packaging format, the file target structure, the file name, character encoding, and TR069 file type definition. It can be understood that in order to ensure the integrity of the TR181 extended model, the TR181 extended model needs to be configured with attributes such as the file packaging format, file target structure, file name, character encoding, and TR069 file type definition. As shown in Table 2, each file upload attribute corresponds to one rule.

**Table 2.**

| | Requirements for file upload |
|---|---|
| file packaging format | tar.gz |
| file packaging naming | pmmodel.tar.gz |
| file directory structure | .pmmodel.tar.gz\pmmodel.tar\ |
| file definition | file format is csv; |
| | Specifically comprising the following files: |
| | Group definition file: group.csv |
| | Counter file: KPI.csv |

| | Measurement object file: mot.csv |
|---|---|
| character encoding | UTF-8 |
| TR069 file type | X *** pmmodel |

Compared with the SOAP message body, the file format CSV has fewer duplicate fields.

In an implementation, after receiving the TR181 extended model file uploaded by the terminal device, the method further includes that: a target key value of the index field corresponding to the service data which is sent by the terminal device is received in the service operation period; and the values of the description field and the internationalization field both associated with the target key value are obtained from the uploaded TR181 extended model file. It can be understood that the network management device receives the service data sent by the terminal device during service operation, and may extract the target key value of the index field corresponding to the service data; and the values of the description field and the internationalization field both associated with the target key value can be obtained based on the target key value. Through the above association relationship, the TR181 extended model information, such as extended fields, internationalization fields in both Chinese and English, and detailed information description, of the target service during operation can be obtained.

Fig. 2 shows another flowchart of a model extension method in the embodiment of the present application, the method 200 may be executed by terminal devices. As shown in Fig. 2, the method may comprise the following steps.

At S210: a pre-set TR181 extended model file for the target service is obtained.

The TR181 extended model file comprises: an index field configured based on the type of the target service, at least one description field configured based on the a description parameter of the target service, and an internationalization field which is described in at least two languages and added to the target field in the at least one description field based on the degree of adaptability of the target service in terms of globalization; and the TR181 extended model file records at least one association relationship, including the association relationship between the value of the index field, the value the description field, and the value of the internationalization field.

At S220: the TR181 extended model file is uploaded to the network management device.

By uploading the TR181 extended model file to the network management device, the network management device may extend the model according to the TR181 extended model file. Moreover, during service operation, the terminal device only needs to send the value of the corresponding index field to the network management device. Based on the value, the network management device can obtain the values of various description fields corresponding to the value of the index field, thereby enabling the network management device to obtain rich information and facilitate management.

In an implementation, prior to uploading the TR181 extended model file to the network management device, the method may further include that: a file upload command is received from the network management device. The file upload command may be an RPC file upload command. RPC file upload is the basic interface channel for communication between ACS and terminals. By defining a new FileType, this channel can be multiplexed. After receiving the FileType, the terminal device may upload TR181 extended model file.

It can be understood that the terminal device may actively upload the TR181 extended model file to the network management device after accessing to the network management device or at other appropriate times, or may upload TR181 extended model file after receiving the file upload command sent by the network management device.

Optionally, after uploading the TR181 extended model file, the terminal device may also send a message to the network management device to notify the network management device of upload of the model file, for example, by means of a SOAP message body.

Optionally, due to the complexity of functions of the terminal device itself, one single model file is usually unable to fully describe the functions of the terminal device. One functional service may contain multiple TR181 extended model files, and the files may be compressed and packaged for one-time upload. For example, for performance services, as shown in Table 2, one performance service corresponds to three TR181 extended model files: group.csv, KPI.csv, and mot.csv. When uploading the files, the terminal may package them according to the packaging format described in Table 2, and name the packaged files according to the file packaging naming in Table 2 before uploading them all at once. Below are examples of the three TR181 extended model files mentioned above, as shown in Table 3, which is an example of the content of KPI.csv; as shown in Table 4, which is an example of the content of mot.csv; and as shown in Table 5, which is an example of the content of group.csv.

**Table 3.**

| Measurement object type identification | Indicator identification | Chinese name of indicator | English name of indicato r | Chine se units | Englis h units | Group ID |
|---|---|---|---|---|---|---|
| Source of value: | Source of value: | Source of value: | Source of value: | Chine se units | Englis h units | Optio nal |
| Alias in the Device.PeriodicStati stics.SampleSet. {i} | Alias in the Device.PeriodicSt atistics.SampleSet . {i} .Parameter. {i} | | | | | |
| | | Chinese Internation alization for the "indicator identificati on" | English Internati onalizati on for the "indicato r identifica tion" | | | |
| environment 15 mins | CPU Rate Latest | CPU 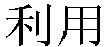 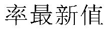 | CPU Use Rate Latest | % | % | CPU Use Rate |

**Table 4.**

| Measurement object type identification | Chinese name of the measurement object type | English name of the measurement object type |
|---|---|---|
| Source of value: | Source of value: | Source of value: |
| Alias in the Device.PeriodicStatistics.SampleSet. {i} | Chinese Internationalization for the "measurement object type identification" | English Internationalization for the "measurement object type identification" |
| environment 15 mins | 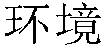 15 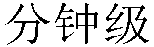 | environment 15 mins |

**Table 5.**

| Group ID | Group name in Chinese | Group name in English |
|---|---|---|
| Source of value: | Source of value: | Source of value: |
| Self named, KPIs with the same meaning but different enumeration values can be assigned the same identifier. For example: maximum value | Chinese Internationalization for the "Group ID" field | English Internationalization for the "Group ID" field |
| CPU Use Rate | CPU 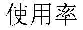 | CPU Use Rate |

In the embodiment of the present application, the terminal device uploads the supporting TR181 extended model file is uploaded to the network management device, which not only enables the obtained TR181 extended model to meet the target service requirements of the terminal device, but also improves the flexibility and availability of the TR181 extended model.

In an implementation, uploading the updated TR181 extended model file to the network management device may include that: the updated TR181 extended model file is uploaded to the network management device according to the file upload attributes, wherein the file upload attributes include at least one of the following: the file packaging format, the file target structure, the file name, character encoding, and the TR069 file type definition. Regarding the content of file attributes, please refer to the relevant description in the embodiment shown in Fig. 1, which will not be repeated here.

In an implementation, after uploading the updated TR181 extended model file to the network management device, the method further includes that: the target key value of the index field corresponding to the service data that needs to be sent to the network management device is determined in the service operation period; and the target key value is sent to the network management device. That is to say, the terminal needs to report the service data of the target service during operation. The network management device may associate the TR181 extended model with the service data during operation based on the index field, thereby improving the flexibility and availability of the TR181 extended model.

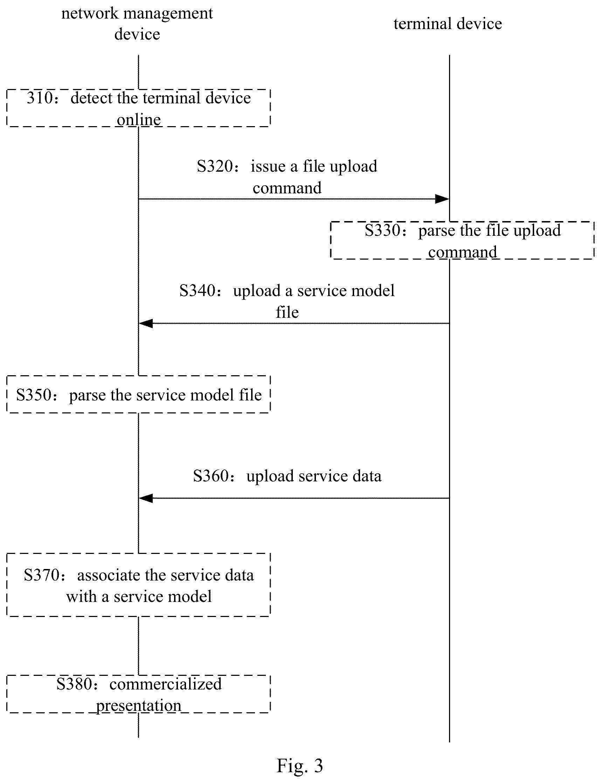

Referring to Fig. 3, the embodiments shown in Figs. 1 to 2 are further explained therebelow.

At S310: it is detected that a terminal device is online.

At S320: a file upload command is issued.

A network management device formulates a unified extended model based on different service characteristics, and the model can be adapted by various terminal manufacturers. For example, for alarm services, the network management device may extend the TR181 extended model file as shown in Table 1 above. The network management device defines the table header and the example description in the second row, and the terminal manufacturers shall fill in the content starting from the third row. Therefore, the network management device needs to issue a service model file upload command at the appropriate time, and upload may be performed in the RPC file upload method defined in the TR069 specification. The time for issuing may time when the terminal device is newly managed, time when there is a change in the connection/disconnection status, or time when a scheduled scan detects missing of the model. Usually, the same model and version only include one set of service models, and there is no need to issue the command for each device.

At S330: the file upload command is parsed.

At S340: the service model file is uploaded.

The terminal device receives an RPC file upload command from the network administrator, and uploads the service static model to the specified directory.

At S350: the service model file is parsed.

The network management device parses the service model uploaded by the terminal device and stores the service static fields according to the unified platform model rules of the network management device.

At S360: service data is uploaded.

The terminal device reports service data generated during operation to the network administrator by means of an inform message according to the TR069 specification definition.

At S370: the service data is associated with the service model.

The network administrator parses the data during operation and associates it with the service static model. Information is displayed at the front-end completely. In the SOAP message body format of the inform message reported by the terminal, the alarm service, may be associated with the static model through the Device.FaultMgmt.ExpeditedEvent. {i}.ProbableCause in the SOAP; and the performance indicator statistics service may be associated with the static model through the Device.PeriodicStatistic.SampleSet. {i} .Alias.

At S380: Commercialized presentation is performed.

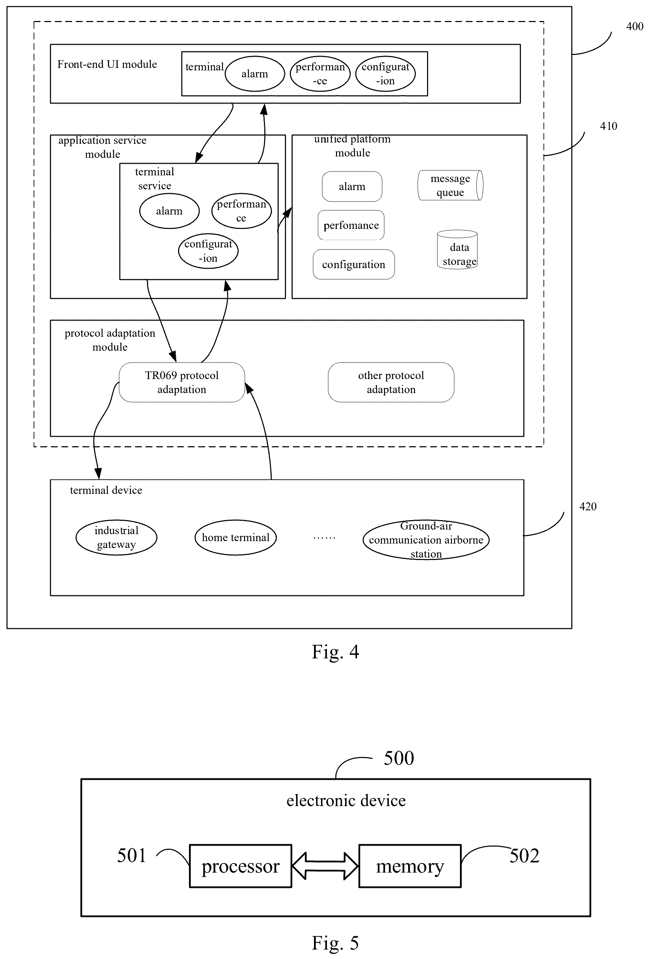

Fig. 4 shows a structural diagram of a model extension system for commercialization. The model extension system 400 includes a network management device 410 and a terminal device 420. The network management device 410 includes the following components.
1. A front-end UI module is used to provide interface presentation of network management features and functions, supporting user observation and operation interaction. A possible alternative is that the service data model is not uploaded to the network administrator by terminal devices, but is pre-set by the network management device. When the terminal does not access the network management, or has been accessed to the network management but there is no alarm event, the front-end UI module can present detailed information about the specific alarm, such as alarm description, cause, alarm level, alarm type, and handling method. When the terminal has accessed to the network management and generates an alarm, it captures the packet at the TR069 protocol adaptation layer of the network management, checks the message fields of the TR181 specification in the SOAP body reported by the alarm, and corresponds to individual fields of the alarm finally presented by the network management, but the information in the SOAP is obviously simple. When the terminal has accessed to the network management and generates an alarm or performance statistics, packet capture is performed in the network management to check that the reported TR181 INFORM message body only has one language, while the front-end UI module may switch between different language environments, and the final alarm and performance data are displayed adaptively according to different language environments.
2. An application service module is used to provide service response matching the front-end UI, obtain the data required by the front-end, and provide feedback.
3. A unified platform module, usually designed in accordance with ITU-T telecommunications specifications for its underlying storage structure, is used to provide unified storage and entry of application data.
4. A protocol adaptation module typically has multiple protocol adapters depending on the type of device being managed, such as TR069 protocol adaptation, and NETCONF protocol adaptation. The TR069 protocol adaptation mainly includes: a. support for identity authentication mechanisms specified in the protocol, such as basic authentication, digest authentication, and certificate authentication; b. support for RPC methods specified in the protocol for communication and interaction with terminals; c. support for message interaction between the SOAP message body and request header specified in the protocol; d. support for terminal message reporting and preliminary parsing. After parsing, encapsulate it according to the network management structure and broadcast it to relevant modules, such as alarm event reporting and performance statistics cycle reporting; and e. support for triggering operations through network management and issuing them to terminals for execution, such as upgrading, restarting, and configuring activation.

The terminal device 420 includes various TR069 protocol supported terminals in ground-air communication, factories and mines, enterprise parks, ports and docks, office buildings, and home broadband, exemplarily:
1. Ground-air communication airborne station CPE. The data return function based on 5G NR is installed in the equipment cabin and wirelessly transmitted to the onboard WiFi AP system by accessing the ground 5G NR base station.
2. Industrial gateways facilitate the automation of unmanned vehicle on-site operations, such as key equipment for on-site operations in the steel industry.
3. Port industrial control application service terminal, connecting engineering control operation channels.
4. Mine edge computing gateway terminal, assisting in on-site return of operation video.
5. In production automation industrial parks, an Automated Guided Vehicles (AGVs) is used for logistics turnover automation.
6. Home device terminals, personal wearable terminals.

The traditional TR069 device network management only parses terminal runtime data through the TR069 protocol adaptation layer and presents it directly at the front-end. There are problems with terminal runtime data supporting only one language, missing part of the basic information, and simple information content without complete description. In the present application, the application service module can detect whether the TR069 extended model exists based on the terminal product version managed by the network management. If it does not exist, it will issue an extended model upload command to the terminal device; parse and use the extended model uploaded by the terminal; the protocol adaptation module can receive extended model upload messages issued by the application layer, convert them into SOAP message bodies uploaded as TR069 files, and send them to the terminal device through the RPC interface; receive the extended model uploaded by the terminal; the terminal device can respond to the extended model upload command and complete the model file upload through the HTTPS protocol.

In this embodiment, from the perspective of problem-solving flexibility, the terminal static model is separated from service statistics. Terminal service statistics focus on collecting and reporting the operational data, while the static model focuses on understanding and abstracting remote operation and maintenance of network management. The loading method of the model is flexible, and it can be passively reported by the terminal, actively reported, imported in the network management, and pre-set in the network management. From the perspective of applicability, network management only formulates static models that expand the TR069 specification, and terminal manufacturers provide model adaptation, which can quickly replicate this capability across multiple terminal manufacturers and service modules. From the perspective of product competitiveness, terminal manufacturers that support model expansion have higher operational efficiency and lower costs. Network management vendors who formulate the extended models have a more user-friendly interface and richer information. As a basic capability, they enter high-end operators and enterprises, providing guarantee capabilities for the operation and maintenance efficiency and operation and maintenance costs of products.

Optionally, as shown in Fig. 5, the embodiment of the present application also provides an electronic device 500, comprising a processor 501 and a memory 502. The memory 502 stores programs or instructions that can be run on the processor 501. When the program or instruction is executed by the processor 501, it implements the various steps of the embodiments shown in Figs. 1 to 4 and can achieve the same technical effect. To avoid repetition, it will not be repeated here.

The embodiment of the present application also provides a readable storage medium on which programs or instructions are stored. When the program or instruction is executed by a processor, it implements the various processes of the embodiments shown in Figs. 1 to 4 and can achieve the same technical effect. To avoid repetition, it will not be repeated here.

The processor is the processor in the terminal described in the above embodiment. The readable storage medium comprises computer- readable storage medium such as read-only memory (ROM), random access memory (RAM), magnetic disk or optical disk, etc. In some examples, the readable storage medium may be a non transient readable storage medium.

The embodiment of the present application also provides a chip, which comprises a processor and a communication interface. The communication interface is coupled to the processor, and the processor is used to run programs or instructions to implement the various processes of the embodiments shown in Figs. 1 to 4, and can achieve the same technical effect. To avoid repetition, it will not be repeated here.

It should be understood that the chips mentioned in the embodiment of the present application can also be referred to as system level chips, system chips, chip systems, or on-chip system chips, etc.

The embodiment of the present application also provides a computer program/program product, which is stored in a storage medium and executed by at least one processor to achieve the various processes of the embodiments shown in Figs. 1 to 4 and achieve the same technical effects. To avoid repetition, it will not be repeated here.

It should be noted that, the terms "include", "comprises" or any other variants thereof herein are intended to cover non-exclusive inclusion, so that a process, method, object or apparatus including a series of elements includes not only those elements, but also other elements not explicitly listed, or also includes elements inherent to such process, method, article or apparatus. In the absence of further restrictions, an element defined by the sentence "comprising a ..." does not exclude the presence of other identical elements in the process, method, object or apparatus comprising the element. In addition, it should be pointed out that the scope of the methods and devices in the embodiments of the present application is not limited to performing functions in the order shown or discussed, and may also include performing functions in a substantially simultaneous manner or in the opposite order according to the functions involved. For example, the described methods may be performed in a different order than described, and various steps may be added, omitted, or combined. Additionally, the features described with reference to certain examples can be combined in other examples.

Through the description of the above implementations, those skilled in the art can clearly understand that the above implementations can be implemented by using computer software products and necessary general hardware platforms, or of course, they can also be implemented through hardware. The computer software product is stored in storage medium such as ROM, RAM, magnetic disks, optical disks, etc., and includes several instructions to enable terminals or network side devices to execute the methods described in various embodiments of the present application.

The embodiments of the present application have been described above in conjunction with the accompanying drawings, but the present application is not limited to the specific embodiments described above. The specific embodiments described above are only illustrative and not restrictive. Those skilled in the art can also make many forms of embodiments under the inspiration of the present application without departing from the scope protected by the purpose and claims of the present application, all of which are within the protection of the present application.

## Claims

1. A model extension method, performed by a network management device, the method comprising:
configuring, on the basis of a type of a target service, a TR181 extended model file of the target service with an index field;
configuring, on the basis of a description parameter of the target service, the TR181 extended model file of the target service with at least one description field, wherein the description field is used for expressing a feature of the description parameter; and
setting a length of each description field on the basis of a global specification and a degree of adaptability of the target service in terms of globalization, so as to extend the TR181 extended model file.

2. The method according to claim 1, wherein setting the length of each description field on the basis of the global specification and the degree of adaptability of the target service in terms of globalization comprises:
adding, on the basis of the degree of adaptability of the target service in terms of globalization, an internationalization field described in at least two languages to a target field among the at least one description field; and
setting the length of each description field and a length of each internationalization field on the basis of a standard expression of each description field and a standard expression of each internationalization field.

3. The method according to claim 1, wherein after setting the length of each description field on the basis of the global specification and the degree of adaptability of the target service in terms of globalization, the method further comprises:
adding, on the basis of a meaning of each description field and the length of each description field, a filling rule to each field of the TR181 extended model file.

4. The method according to any one of claims 1-3, wherein after setting the length of each description field on the basis of the global specification and the degree of adaptability of the target service in terms of globalization, the method further comprises:
issuing a file upload command to a terminal device upon a target condition, wherein the file upload command is used to instruct upload of the TR181 extended model file corresponding to the terminal device; and
receiving the TR181 extended model file uploaded by the terminal device, wherein an uploaded TR181 extended model file records at least one association relationship, the at least one association relationship comprising association relationship between a value of the index field, a value of the description field, and a value of the internationalization field. ,

5. The method according to claim 4, wherein issuing the file upload command to the terminal device comprises:
converting the file upload command into a first Simple Object Access Protocol called SOAP message body upload by means of a TR069 specification file; and
sending the first SOAP message body to the terminal device through a remote procedure call called RPC interface defined by the TR069 specification.

6. The method according to claim 4, wherein after receiving the uploaded TR181 extended model file by the terminal device, the method further comprises:
receiving a second SOAP message body uploaded by the terminal device through the RPC interface defined by the TR069 specification, and obtaining completion of upload of the TR181 extended model file by parsing the second SOAP message body.

7. The method according to claim 4, wherein the method further comprises: formulating specification of an extended model, the specification of the extended model comprises at least one of following file upload attributes of the TR181 extended model file: a file packaging format, a file target structure, a file name, character encoding, and a TR069 file type definition.

8. The method according to claim 3, wherein after receiving the TR181 extended model file uploaded by the terminal device, the method further comprises:
receiving a target key value of an index field corresponding to service data which is sent by the terminal device in a service operation period; and
obtaining values of the description field and the internationalization field both associated with the target key value from the uploaded TR181 extended model file.

9. The method according to claim 4, wherein the target condition comprises one of the following:
determining that a current version of the terminal device lacks a corresponding service model file;
determining that the terminal device accesses the network management device for the first time; or
determining that a connection status between the network management device and the terminal device is changed.

10. A model extension method, performed by a terminal device, the method comprising:
obtaining a pre-set TR181 extended model file for a target service, wherein the TR181 extended model file comprises: an index field configured on the basis of a type of the target service, at least one description field configured on the basis of a description parameter of the target service, and an internationalization field which is described in at least two languages, and added to a target field among the at least one description field on the basis of a degree of adaptability of the target service in terms of globalization, and the TR181 extended model file records at least one association relationship, the at least one association relationship comprising association relationship between a value of the index field, a value the description field, and a value of the internationalization field; and
uploading the TR181 extended model file to a network management device, so that the network management device can perform model extension according to the TR181 extended model file.

11. The method according to claim 10, wherein prior to uploading the TR181 extended model file to the network management device, the method further comprises:
receiving a file upload command from the network management device.

12. The method according to claim 10, wherein uploading the TR181 extended model file to the network management device comprises:
uploading the TR181 extended model file to the network management device according to file upload attributes, wherein the file upload attributes comprise at least one of the following: a file packaging format, a file target structure, a file name, character encoding, and a TR069 file type definition.

13. The method according to any one of claims 10-12, wherein after uploading the TR181 extended model file to the network management device, the method further comprises:
sending a target key value of an index field corresponding to service data to the network management device in a service operation period.

14. An electronic device, comprising a processor and a memory, the memory stores programs or instructions executable on the processor, the programs or instructions, when executed by the processor, implement the steps of the model extension method according to any one of claims 1 to 13.

15. A readable storage medium storing programs or instructions, the programs or instructions, when executed by a processor, implement the steps of the model extension method according to any one of claims 1 to 13.
